Europäisches Patentamt

European Patent Office

Office européen des brevets

(11) Publication number: **0 179 086**
**B1**

# EUROPEAN PATENT SPECIFICATION

(45) Date of publication of patent specification: **18.05.88**

(51) Int. Cl.⁴: **B 65 G 15/58**

(21) Application number: **85901634.7**

(22) Date of filing: **14.03.85**

(86) International application number:
**PCT/SE85/00121**

(87) International publication number:
**WO 85/04152 26.09.85 Gazette 85/21**

(54) **ARRANGEMENT IN A SEALING MACHINE.**

(30) Priority: **14.03.84 SE 8401435**

(43) Date of publication of application:
**30.04.86 Bulletin 86/18**

(45) Publication of the grant of the patent:
**18.05.88 Bulletin 88/20**

(84) Designated Contracting States:
**AT BE CH DE FR GB LI LU NL SE**

(56) References cited:
**DE-A-1 781 436**
**GB-A- 608 938**
**SE-B-74 161 225**
**SE-B-76 130 830**

(73) Proprietor: **SPRINTER SYSTEM AB**
**Box 158**
**S-301 03 Halmstad (SE)**

(72) Inventor: **WALLIN, Kay**
**Sandhamnsvägen 1**
**S-302 71 Halmstad (SE)**

(74) Representative: **Bjelkstam, Peter et al**
**AB Bonnierföretagen Patent Department**
**S-105 44 Stockholm (SE)**

Courier Press, Leamington Spa, England.

## Description

The present invention relates to an arrangement in a sealing machine through which there extends a conveying means comprising transporting conveyors, which have a plurality of constraining means at predetermined spacing in the conveying direction for packages, which are intended to be sealed in the sealing machine after they have been filled, said conveyors comprising one or more belts running side by side in the same plane and said constraining means comprising perforations in the belts, the openings of the perforations facing towards the interior of the conveyor being in communication with a vacuum source, and the openings facing towards the carrying surface of the conveying means being intended to co-act with the underside of the packages placed on the conveying means for locating said packages on the belts of the means during conveying through the sealing machine and with the aid of the suction achieved via the perforations from the vacuum, such arrangement is previously known.

In the machines used today for sealing packages filled with a content it has been difficult to prevent slopping over of the contents during the sealing operation. Owing to this problem the sealing speed has not been able to be increased and because of that the sealing machines are not so effective as you want them to be. From the prior art references i.e. DE—A—1 781 436 a conveying means is previously known comprising transporting conveyors using vacuum for holding the goods intended to be transported pressed against the belts constituting a part of the conveyors.

The object of the present invention is to provide an arrangement in a sealing machine of the type mentioned in the introduction, in which the disadvantages present in the already known machines have been eliminated. Essentially distinguishing for the invention is that there is at least one first upper supporting belt conveyor in a first region for the actual sealing of the package flaps, the supporting conveyor is intended for engagement against the upper sides of the packages and preferably having perforations in communication with a vacuum source, that a holding-down device is disposed with its belt or belts on edge preferably at right angles in relation to one of the transporting conveyors and along it, the belts being adapted for transversely pressing in and sealing a longitudinal flap on the packages in the first flap sealing region, and that after flap sealing, the transporting conveyor associated with the first region sealing means connects up with a wider transporting conveyor, on which the packages may be turned 90° in a horizontal plane with the aid of a friction belt device on edge and along the wider transporting conveyor, after which wider transporting conveyor there being arranged at least one further transporting conveyor with two holding-down devices with belts on edge for sealing the side flaps of the packages, there being at least one second upper supporting belt conveyor for engaging against the upper side of the packages in a second flap sealing region.

By means of the present invention a very fast and effective sealing of the preerected package blanks is achieved and in order to obtain this sealing of filled packages the sealing must be done in three stages one after the others. By the combination of vacuum suction conveyors both from below and from above during the flap sealing this sealing can be performed without any waste of the contents from the packages even during the turning of the packages by aid of the friction belt device.

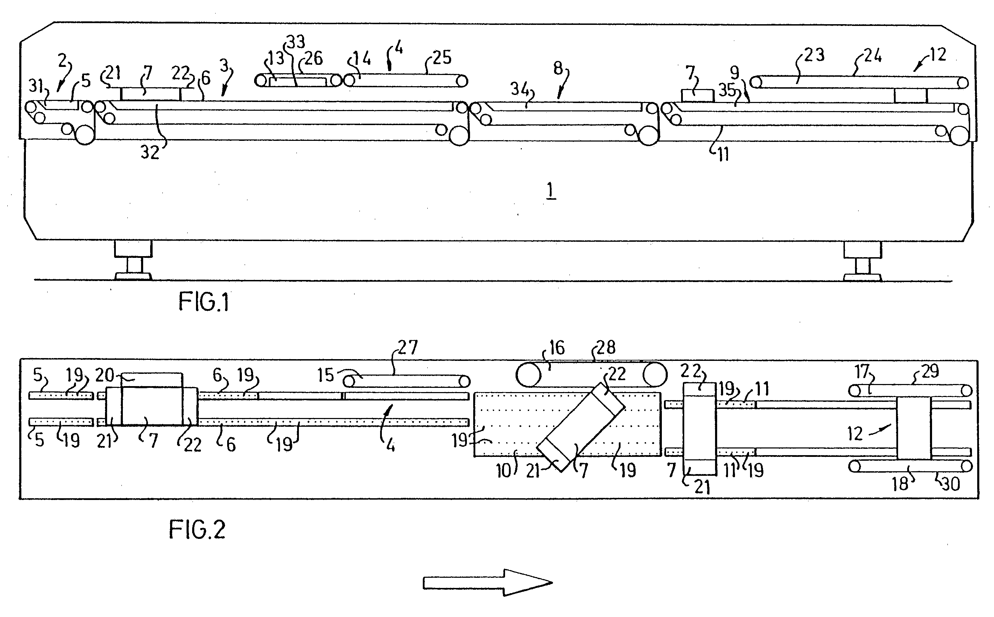

The invention will now be described in detail below with reference to the accompanying drawings, whereon Fig. 1 is a schematic side view of a sealing machine in accordance with the present invention and Fig. 2 schematically illustrates a plan of the machine illustrated in Fig. 1.

A sealing machine in accordance with the present invention is illustrated in Fig. 1 and 2, the machine including a base 1, over which there extends at least one conveying means, and in the conveying direction of the packages 7, which are to be sealed, the means comprises transporting conveyors 2 and 3, 8 and 9. The conveyors 2, 3 and 9 include pairs of belts 5, 6 and 11 running side by side and in the same plane and having perforations 19 with their openings facing towards the interior of the conveyors being in communication with a vacuum source, and the openings facing towards the carrying surface of the belts being intended to co-act with the underside or bottom of the packages 7 placed on the conveyors 2, 3, 9. The vacuum source is connected to suction boxes 31, 32 and 35 situated in the conveyors, and these boxes have holes, not illustrated on the drawing, for registering with the perforations 19 in the belts 5, 6 and 11 when the belts glide over the boxes. The negative pressure in the suction boxes 31, 32 and 35 is sufficiently large for the packages 7 to be retained effectively against the belts by the suction which is maintained via the holes in the perforations 19. By varying the speed of the conveyor 2 at the entry to the sealing machine in relation to the following conveyor 3 a suitable spacing can be provided between the different types of package 7 which are to be sealed. There are two belt conveyors 13, 14 arranged for engagement against the upper sides of the packages 7 above the conveyor 3 in a first region 4 for the actual flap sealing of the packages. The first upper supporting conveyor 13 has belts 26 provided with perforations 19 in communication with a vacuum source via a suction box 33. The following upper supporting belt conveyor 14 includes belts 25 which lack perforations in the illustrated embodiment. As will be seen from Fig. 2 there is a holding-down device 15 with its belts 27 arranged along, adjacent and at right angles to the belt 6, such as to transversely press in and seal a longitudinal flap 20 on the packages 7. The speed of the conveyor 13 is adjustable in relation to that of the transporting conveyor 3, and with the aid hereof and the suction in the perforations 19 on the belts 26 due to the vacuum in the suction box 33, an oblique pull on the cover of the package 7 can be avoided or corrected with the cover is pressed down on to the package.

There is a package turning transporting conveyor 8 with a wide belt 10 after the transporting conveyor 3, and similar to previously described belts with perforations 19 it is in communication with a vacuum source via a suction box 34. This conveyor 8 is situated immediately after the first flap sealing region 4 of the conveyor 3 and is implemented such that with the aid of a friction belt device 16 with belts 28 disposed along the conveyor 8 and at right angles thereto it turns the packages 90°.

There may be one or more belts 28 equipped with a plurality of flights in the form of small fingers or pins adapted for engaging with the packages 7 during the turning movement. The fingers which are not in use are retractable inwards towards the belts 28 in their travelling direction. The fingers are normally outstanding and retract automatically for transverse pressure or engagement by the packages 7. The speed of the belt 28 is preferably somewhat lower than that of the wider transporting conveyor 8 for enabling as gentle turning as possible. The further transporting conveyor 9 is disposed to follow after the conveyor 8 and conveys the package 7 with its side flaps 21, 22 projecting out from it transverse the conveying direction along the conveyor 9, these side flaps 21, 22 being intended for sealing against the package in a second flap sealing region 12. In this region there is a second upper supporting belt conveyor 23 with belts 24 for engaging against the upper side of the package 7. As will be seen from Fig. 2 there are two further holding-down conveyors 17, 18 with belts 29, 30 in the flap sealing region 12 for pressing the side flaps 21, 22 against the side walls of the package 7. The belts 5, 6, 10, 11 used in the conveyors 2, 3, 8, 9 may preferably be toothed, with the central portion in which the perforations 19 are arranged lacking teeth on the side of the belts facing towards the suction boxes. The perforations 19 in the belts 5, 6, 10, 11 and 26 pass over holes in the suction boxes 31, 32, 33, 34, 35, these holes preferably having a diameter of 2 mm and are arranged consecutively at a spacing of preferably 12 mm. The perforations 19 in the belts 5, 6, 10, 11, 26 preferably have a diameter of 12 mm and are arranged in the longitudinal directon of the belts at a distance of preferably 30 mm.

The placing of the vacuum perforations 19 in the belts 5, 6, 10, 11 and 26 have a pitch corresponding to a disposition of the perforations 19 such that at least one perforation always co-acts with each of the packages 7 on the conveyors. The lesser the pitch between the perforations 19 in the belts is, the greater will be the attraction of the packages 7 to the conveyors.

## Claims

1. Arrangement in a sealing machine through which there extends a conveying means comprising transporting conveyors (2, 3, 8, 9) which have a plurality of constraining means (19) at predetermined spacing in the conveying direction for packages (7) which are intended to be sealed in the sealing machine after they have been filled, said conveyors comprising one or more belts (5, 6, 10, 11) running side by side in the same plane and said constraining means comprising perforations (19) in the belts, the openings of the perforations facing towards the interior of the conveyor being in communication with a vacuum source, and the openings facing towards the carrying surface of the conveying means being intended to co-act with the underside of the packages (7) placed on the conveying means (2, 3, 8, 9) for locating said packages on the belts of the means during conveying through the sealing machine and with the aid of the suction achieved via the perforations (19) from the vacuum, characterized in that there is at least one first upper supporting belt conveyor (13, 14) in a first region (4) for the actual sealing of the package flaps, the supporting conveyor is intended for engagement against the upper sides of the packages (7) and preferably having perforations (19) in communication with a vacuum source, in that a holding-down device (15) is disposed with its belt or belts on edge preferably at right angles in relation to one of the transporting conveyors (3) and along it, the belts (27) being adapted for transversely pressing in and sealing a longitudinal flap (20) on the packages (7) in the first flap sealing region (4), and in that after flap sealing, the transporting conveyor (3) associated with the first region sealing means connects up with a wider transporting conveyor (8), on which the packages (7) may be turned 90° in a horizontal plane with the aid of a friction belt device (16) on edge and along the wider transporting conveyor (8), after which wider transporting conveyor there being arranged at least one further transporting conveyor (9) with two holding-down devices (17, 18) with belts (29, 30) on edge for sealing the side flaps (21, 22) of the packages, there being at least one second upper supporting belt conveyor (23) for engaging against the upper side of the packages (7) in a second flap sealing region (12).

2. Arrangement as claimed in claim 1, characterised in that the belts (5, 6, 10, 11, 26) are toothed belts and that the perforations (19) in them have a diameter of about 12 mm and are placed in rows after each other with a pitch of about 30 mm.

3. Arrangement as claimed in claim 1, characterized in that the holes in the suction boxes (31—35) have a diameter of about 2 mm and are arranged in longitudinal rows with a pitch of about 12 mm.

4. Arrangement as claimed in claim 1, characterized in that the speed of the first upper belt conveyor (13, 14) for engaging against the upper side of the packages (7) is adjustable relative that of the transporting conveyor (3) associated with the first region sealing means for avoiding pulling the package cover on the skew when it is folded onto the package (7).

5. Arrangement as claimed in claim 1, characterized in that the friction belt device (16) includes at least one belt (28) with a plurality of constraining means in the form of small fingers or pins which are upstanding in their working position for engaging against the packages (7) and are retractable inwardly towards the belt (28), said belt (28) having a speed falling below that of the wider transporting conveyor (8).

## Patentansprüche

1. Anordnung bei einer Versiegelungsmaschine, durch welche hindurch sich eine Beförderungseinrichtung erstreckt, die Transportförderer (2, 3, 8, 9) umfasst, welche eine Vielzahl von Haltemitteln mit einem vorbestimmten Abstand in der Förderrichtung von in der Versiegelungsmaschine nach ihrer Füllung zu versiegelnden Verpackungen aufweisen, wobei die Förderer einen oder mehrere, in der gleichen Ebene nebeneinander verlaufender Riemen (5, 6, 10, 11) und die Haltemittel in diesen Riemen ausgebildete Perforationen (9, 10) umfassen, deren gegen den Innenraum der Förderer ausgerichtete Öffnungen mit einer Vakuumquelle in Verbindung sind und deren gegen die Tragfläche der Beförderungseinrichtung ausgerichtete Öffnungen für ein Zusammenwirken mit der Unterseite der auf die Förderer (2, 3, 8, 9) aufgelegten Verpackungen vorgesehen sind zum Halten der Verpackungen auf den Riemen der Beförderungseinrichtung während ihrer Beförderung durch die Versiegelungsmaschine hindurch und mit der Unterstützung durch die über die Perforationen (19) aus dem Vakuum erhaltene Ansaugung, dadurch gekennzeichnet, daß wenigstens ein erster obere stützender Riemenförderer (13, 14) in einem ersten Bereich (4) für das tatsächliche Versiegeln der Verpackungslaschen vorhanden ist, der für ein Einwirken gegen die oberen Seiten der Verpackungen (7) vorgesehen ist und vorzugsweise mit einer Vakuumquelle verbundene Perforationen (19) aufweist, daß eine Niederhaltevorrichtung (15) mit einem oder mit mehreren Riemen vorzugsweise rechtwinklig zu einem der Transportförderer (3) und am einen Rand entlang desselben angeordnet ist, wobei die Riemen (27) für ein Eindrücken in Querrichtung und ein Versiegeln einer Längslasche (20) an den Verpackungen (7) in dem ersten Laschen-Versiegelungsbereich (4) eingerichtet sind, und daß nach dem Versiegeln der Laschen der zu dem ersten Laschen-Versiegelungsbereich zugehörige Transportförderer (3) an einen weiteren Transportförderer (8) anschließt, auf welchem die Verpackungen mittels einer am einen Rand entlang des breiteren Transportförderers (8) angeordneten Reibriemenvorrichtung (16) um 90° in einer horizontalen Ebene gedreht werden können, wobei nach dem breiteren Transportförderer für ein Versiegeln der Seitenlaschen (21, 22) der Verpackungen wenigstens ein weiterer Transportförderer (9) mit zwei Niederhaltevorrichtungen (17, 18) mit Riemen (29, 30) an den beiden Rändern und wobei wenigstens ein zweiter oberer stützender Riemenförderer (23) für ein Einwirken gegen die obere Seite der Verpackungen (7) in einem zweiten Laschen-Versiegelungsbereich (12) angeordnet sind.

2. Anordnung nach Anspruch 1, dadurch gekennzeichnet, daß die Riemen (5, 6, 10, 11, 26) Zuhnriemen sind und daß ihre Perforationen einen Durchmesser von etwa 12 mm haben und in Reihen hintereinander in einem Abstand von etwa 30 mm angeordnet sind.

3. Anordnung nach Anspruch 1, dadurch gekennzeichnet, daß die Löcher in den Saugkästen (31—35) einen Durchmesser von etwa 2 mm haben und in Längsreihen mit einem Abstand von etwa 12 mm angeordnet sind.

4. Anordnung nach Anspruch 1, dadurch gekennzeichnet, daß die Geschwindigkeit des ersten oberen Reimenförderers (13, 14) zum Einwirken gegen die obere Seite der Verpackungen (7) relativ zu derjenigen des Transportförderers (3) des ersten Laschen-Versiegelungsbereichs einstellbar ist um ein Ziehen des Verpackungsdeckels in schiefer Richtung zu verhindern, wenn er auf die Verpackung (7) aufgefaltet wird.

5. Anordnung nach Anspruch 1, dadurch gekennzeichnet, daß die Reibriemenvorrichtung (16) wenigstens einen Riemen (28) mit einer Vielzahl von Haltemitteln in der Form von kleinen Fingern oder Stiften aufweist, die in ihrer Arbeitsstellung für ein Einwirken gegen die Verpackungen (7) aufrecht angeordnet und gegen den Riemen (28) nach innen zurückziehbar sind, wobei der Riemen (28) eine unter die Geschwindigkeit des breiteren Transportförderers (8) abfallende Geschwindigkeit hat.

## Revendications

1. Agencement dans une machine de fermeture à travers laquelle s'étendent des moyens convoyeurs comportant des convoyeurs de transport (2, 3, 8, 9) qui présentent une pluralité de moyens de retenue (19) à un espacement prédéterminé dans la direction de transport des emballages (7) qui sont destinés à être fermés dans la machine de fermeture après qu'ils ont été remplis, lesdits convoyeurs comportant une ou plus d'une courroie (5, 6, 10, 11) circulant côte à côte dans le même plan et lesdits moyens de retenue présentant des perforations (19) dans les courroies, les ouvertures des perforations tournées vers l'intérieur du convoyeur étant en communication avec une source à vide, et les ouvertures tournées vers la surface de support des moyens convoyeurs étant destinées à coopérer avec la face inférieure des emballages (7) placés sur les moyens convoyeurs (2, 3, 8, 9) pour positionner lesdits emballages sur les courroies des moyens lors du transfert à travers la machine de fermeture et avec l'aide de l'aspiration effectuée à travers les perforations (19) à partir du vide, caractérisé en ce qu'il existe au moins un premier convoyeur supérieur de support à courroie (13, 14) dans une première région (4) pour la fermeture effective des panneaux des emballages, le convoyeur de support est destiné à coopérer avec les faces supérieures des emballages (7) et présente de préférence des perforations (19) en communication avec une source à vide, en ce qu'un dispositif de maintien (15) est disposé de manière que sa courroie ou ses courroies soient sur chant, de préférence à angle droit par rapport à l'un des convoyeurs de transport (3) et le long de celui-ci, les courroies (27) étant agencées pour presser et fermer transversalement un panneau longitudinal (20) sur les emballages (7) dans la première région (4) de fermeture de panneau, et en ce que, après la fermeture du panneau, le convoyeur de transport (3) associé aux moyens de fermeture de la première région est relié à un convoyeur de transport plus large (8) sur lequel les emballages (7) peuvent être tournés de 90° dans un plan horizontal à l'aide d'un dispositif (16) à courroie de friction disposé sur chant et le long du convoyeur de transport plus large (8), après lequel convoyeur de transport plus large est prévu au moins un autre convoyeur de transport (9) comportant deux dispositifs de maintien (17, 18) et des courroies (29, 30) sur chant pour fermer les panneaux latéraux (21, 22) des emballages, au moins un second transporteur supérieur de support à courroie (23) étant prévu pour coopérer avec la face supérieure des emballages (7) dans une seconde région (12) de fermeture de panneau.

2. Agencement selon la revendication 1, caractérisé en ce que les courroies (5, 6, 10, 11, 26) sont des courroies à dents et en ce que les perforations (19) de celles-ci présentent un diamètre d'environ 12 mm et sont disposées en lignes les unes après les autres suivant un pas d'environ 30 mm.

3. Agencement selon la revendication 1, caractérisé en ce que les orifices des boîtiers d'aspiration (31—35) présentent un diamètre d'environ 2 mm et sont disposés en lignes longitudinales suivant un pas d'environ 12 mm.

4. Agencement selon la revendication 1, caractérisé en ce que la vitesse du premier transporteur supérieur à courroie (13, 14) pour coopérer avec la face supérieure des emballages (7) est réglable par rapport à celle du convoyeur de transport (3) associé aux moyens de fermeture de la première région pour empêcher que le couvercle d'emballage soit tiré en biais lorsqu'il est plié sur l'emballage (7).

5. Agencement selon la revendication 1, caractérisé en ce que le dispositif de friction (16) à courroie comporte au moins une courroie (28) présentant une pluralité de moyens de retenue sous la forme de petits doigts ou broches qui sont verticaux dans leur position de travail pour coopérer avec les emballages (7) et qui sont rétractables intérieurement vers la courroie (28), ladite courroie (28) ayant une vitesse qui est au-dessous de celle du convoyeur de transport plus large (8).

FIG.1

FIG.2

0 179 086